# EUROPEAN PATENT APPLICATION

(11) **EP 4 632 361 A1**
(43) Date of publication of application: **15.10.2025**
(21) Application number: 23900231.4
(22) Date of filing: 02.08.2023
(51) Int. Cl.: G01N 23/04, B60C 19/00, G01M 17/02, G01N 23/18

(54) **TIRE WIRELESS TAG POSITION INSPECTION METHOD, TIRE WIRELESS TAG POSITION INSPECTION DEVICE, AND TIRE WIRELESS TAG POSITION INSPECTION PROGRAM**

(30) Priority: 09.12.2022 JP 2022197474
(71) Applicant: BRIDGESTONE CORPORATION, Chuo-ku Tokyo 104-8340 (JP)
(72) Inventor: OKUDE, Kenichi, Tokyo 104-8340 (JP); YAMADA, Shinpei, Tokyo 104-8340 (JP); HAYASHI, Tatsuya, Tokyo 104-8340 (JP)
(74) Representative: Marks & Clerk LLP
(86) International application number: PCT/JP2023/028319
(87) International publication number: WO 2024/122102

(57) **Abstract**

A tire wireless tag position inspecting method in which a computer carries out processing of: acquiring a captured image captured by X-rays being irradiated onto a tire, in which a wireless tag is embedded, while the tire is being conveyed; extracting a predetermined bead image from the captured image; calculating, from the extracted bead image, an ellipse equation that matches a predetermined reference image; and detecting a position of the wireless tag by using the calculated ellipse equation.

## Description

### Technical Field

The present disclosure relates to a tire wireless tag position inspecting method, a tire wireless tag position inspecting device, and a tire wireless tag position inspecting program.

### Background Art

Japanese Patent Application Laid-Open (JP-A) No. 2022-101234 proposes a tire including: a pair of beads having bead cores, and bead fillers that extend toward tire radial direction outer sides of the bead cores; reinforcing resin layers provided along the bead fillers; and an RFID tag serving as an electronic part unit and disposed so as to contact the reinforcing resin layer.

In a tire in which a wireless tag such as an RFID is embedded within a rubber structure in this way, managing of the manufacturing of tires, managing of the usage history of the tire, and the like can be carried out by the RFID tag that is embedded in the tire and a reader that serves as an external device communicating with one another.

### SUMMARY OF INVENTION

### Technical Problem

In a case in which a wireless tag is embedded in a tire such as in JP-A No. 2022-101234, there is the possibility that the position and posture of the wireless tag within the manufactured tire will be displaced from the position and posture at the time of the embedding thereof, due to deformation of the green tire and flowing of the rubber during vulcanization after the device has been embedded into the green tire member.

Depending on the position where a wireless tag is embedded within a tire, there are cases in which the performance expected of the wireless tag cannot be realized. Therefore, there is the need for a method of non-destructively measuring the embedded position and posture of a wireless tag within a manufactured tire after vulcanization.

A transmission-type X-ray device is an example of a method of inspecting a large number of tires rapidly and non-destructively. However, due to the relationship with the X-ray focal distance, the distortion in the images captured by a transmission-type X-ray device for tires is great, and it is difficult to estimate positional information of a projected object from X-ray captured images unless CT that restructures from a large number of images is used.

An object of the present disclosure is to provide a tire wireless tag position inspecting method, a tire wireless tag position inspecting device, and a tire wireless tag position inspecting program that can detect the position of a wireless tag embedded in a tire from an image captured by a transmission-type X-ray device for tires.

### Solution to Problem

**In** order to achieve the above-described object, in a tire wireless tag position inspecting method relating to a first aspect, a computer carries out processing of: acquiring a captured image captured by X-rays being irradiated onto a tire, in which a wireless tag is embedded, while the tire is being conveyed; extracting a predetermined bead image from the captured image; calculating, from the extracted bead image, an ellipse equation that matches a predetermined reference image; and detecting a position of the wireless tag by using the calculated ellipse equation.

In a tire wireless tag position inspecting method relating to a second aspect, in the tire wireless tag position inspecting method relating to the first aspect, the computer extracts a bead at a serial number side as the predetermined bead.

In a tire wireless tag position inspecting method relating to a third aspect, in the tire wireless tag position inspecting method relating to the first aspect or the second aspect, when calculating the ellipse equation, the computer carries out calculation while reducing a number of parameters of the ellipse equation.

In a tire wireless tag position inspecting method relating to a fourth aspect, in the tire wireless tag position inspecting method relating to the third aspect, when calculating the ellipse equation, the computer calculates the ellipse equation by using four parameters of the ellipse equation.

In a tire wireless tag position inspecting method relating to a fifth aspect, in the tire wireless tag position inspecting method relating to any one of the first aspect through the fourth aspect, the computer corrects the ellipse equation into a perfect circle, and detects a position and an angle of the wireless tag from the corrected perfect circle.

A tire wireless tag position inspecting device relating to a sixth aspect includes: an acquiring section acquiring a captured image captured by X-rays being irradiated onto a tire, in which a wireless tag is embedded, while the tire is being conveyed; an extracting section extracting a predetermined bead image from the captured image acquired by the acquiring section; a calculating section calculating, from the bead image extracted by the extracting section, an ellipse equation that matches a predetermined reference image; and a detecting section detecting a position of the wireless tag by using the ellipse equation calculated by the calculating section.

A tire wireless tag position inspecting program relating to a seventh aspect causes a computer to execute processing of: acquiring a captured image captured by X-rays being irradiated onto a tire, in which a wireless tag is embedded, while the tire is being conveyed; extracting a predetermined bead image from the captured image; calculating, from the extracted bead image, an ellipse equation that matches a predetermined reference image; and detecting a position of the wireless tag by using the calculated ellipse equation. Advantageous Effects of Invention

In accordance with the present disclosure, there is the effect that there can be provided a tire wireless tag position inspecting method, a tire wireless tag position inspecting device, and a tire wireless tag position inspecting program that can detect the position of a wireless tag embedded in a tire from an image captured by a transmission-type X-ray device for tires.

### BRIEF DESCRIPTION OF DRAWINGS

Fig. 1 is a block drawing illustrating the schematic structure of a tire wireless tag position inspecting device relating to a present embodiment.
Fig. 2 is a drawing illustrating an overview of a transmission-type X-ray device for tires.
Fig. 3 is a functional block drawing illustrating functional structures of a processing device of the tire wireless tag position inspecting device relating to the present embodiment.
Fig. 4 is a drawing for explaining the positional relationship between upper and lower beads in a captured image.
Fig. 5 is a drawing illustrating an example of a captured image and upper and lower bead images.
Fig. 6 is a drawing for explaining an example of failure of extracting an upper bead image.
Fig. 7 is a drawing illustrating an example of extracting only an upper bead by extracting an ellipse by edge extraction.
Fig. 8 is a drawing illustrating detection of an RFID.
Fig. 9 is a drawing for explaining extraction of an RFID region.
Fig. 10 is a flowchart illustrating an example of the flow of processing carried out by the processing device of the tire wireless tag position inspecting device relating to the present embodiment.

### DESCRIPTION OF EMBODIMENTS

An embodiment the realizes the technique of the present disclosure is described in detail hereinafter with reference to the drawings. Note the structural elements and processings whose operations and functions have the same actions are denoted by the same reference numerals throughout all of the drawings, and there are cases in which repeat description is omitted as appropriate. Further, the present disclosure is not limited in any way to the following embodiment, and can be implemented by appropriate changes being made thereto within the scope of the object of the present disclosure.

A tire wireless tag position inspecting device relating to the present embodiment detects the position of an RFID (radio frequency identification) that serves as an example of a wireless tag embedded in a tire.

In the molding of a tire, when an RFID that is coated by a rubber sheet is embedded in a tire, the green tire deforms, and the embedded position of the RFID changes. Moreover, when the green tire is vulcanized, there is flowing of the tire, and therefore, the position of the RFID changes, and it is uncertain whether the position of the RFID will become as expected. Thus, the position of an RFID that is embedded in a tire is inspected by the tire wireless tag position inspecting device relating to the present embodiment.

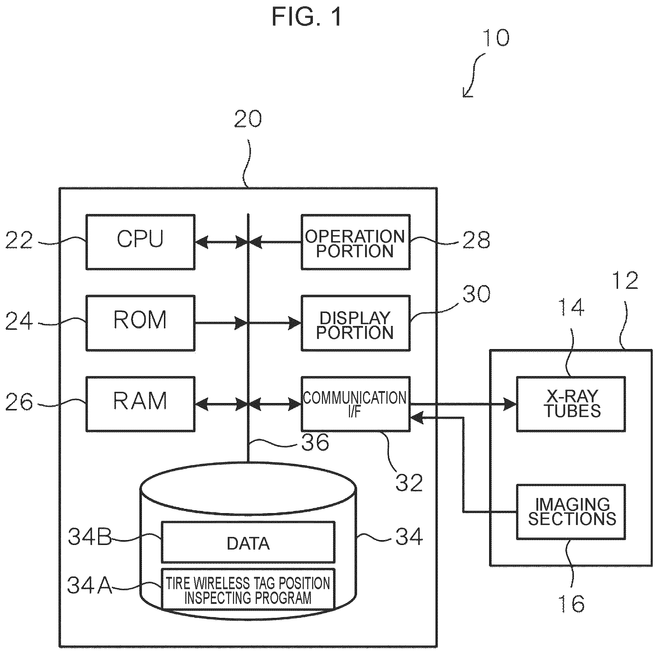

Fig. 1 is a block drawing illustrating the schematic structure of a tire wireless tag position inspecting device relating to the present embodiment.

As illustrated in Fig. 1, a tire wireless tag position inspecting device 10 has a transmission-type X-ray device 12 for tires, and a processing device 20.

The transmission-type X-ray device 12 for tires has X-ray tubes 14 and imaging sections 16. Due to a tire that is being conveyed by a conveyor passing through the transmission-type X-ray device 12 for tires, X-rays are irradiated onto the tire from the X-ray tubes 14 and are transmitted through the tire and are formed into images by the imaging sections 16. X-ray captured images are thereby obtained. The imaging sections 16 are cameras that image X-rays.

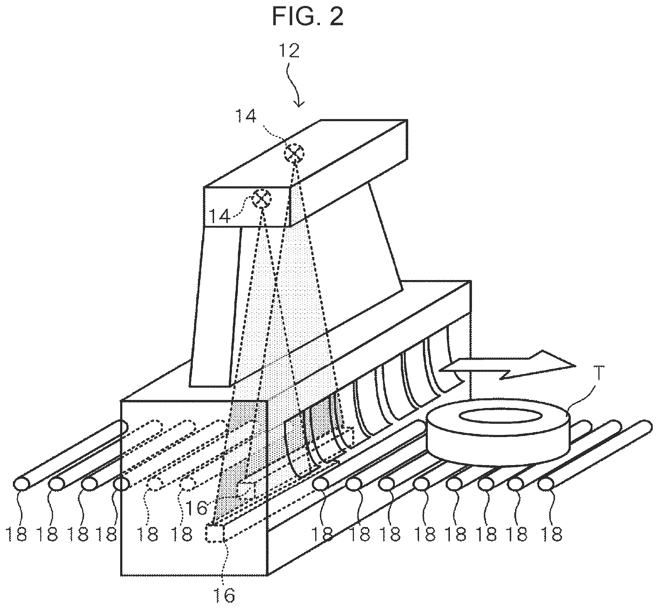

The transmission-type X-ray device 12 for tires is described here. Fig. 2 is a drawing illustrating an overview of the transmission-type X-ray device 12 for tires.

The transmission-type X-ray device 12 for tires is disposed at a conveyor that is structured by plural rollers 18. As illustrated in Fig. 2, tire T is conveyed by the plural rollers 18 and passes through the transmission-type X-ray device 12 for tires.

As illustrated in Fig. 2, the X-ray tubes 14 are provided above the plural rollers 18 and irradiate X-rays onto a side surface side of the tire T from above. In the present embodiment, as an example, as illustrated in Fig. 2, two of the X-ray tubes 14 are provided. One of the X-ray tubes 14 irradiates X-rays onto substantially one-half of the tire T, and the other X-ray tube 14 irradiates X-rays onto the remaining substantial half of the tire T.

The imaging sections 16 are provided beneath the X-ray tubes 14 and between the plural rollers 18, and generate X-ray captured images by detecting the X-rays that have been irradiated onto and transmitted through the tire T. In the present embodiment, linear X-ray detectors are used, and two of the imaging sections 16 are provided so as to correspond to the two X-ray tubes 14. Namely, an X-ray image of the entire tire T is obtained due to X-ray imaging being carried out by the two imaging sections 16 while the tire T is conveyed by the plural rollers 18. Note that the present embodiment is described as a form in which two of each of the X-ray tubes 14 and the imaging sections 16 are provided, but the numbers of the X-ray tubes 14 and the imaging sections 16 are not limited to two, and may respectively be one or may be three or more.

On the other hand, as illustrated in Fig. 1, the processing device 20 has a CPU (Central Processing Unit) 22, a ROM (Read Only Memory) 24, a RAM (Random Access Memory) 26 such as a volatile memory, an auxiliary storage device 34 such as a hard disk device (HDD), an operation portion 28, a display portion 30 and a communication I/F (interface) 32. The CPU 22, the RAM 26, the ROM 24, the auxiliary storage device 34, the operation portion 28, the display portion 30 and the communication I/F 32 are connected so as to be able to transfer data and commands between one another via bus 36.

A keyboard or the like is used as the operation portion 28, and input of various information thereat is possible. The display portion 30 displays various information. The communication I/F 32 is connected to the transmission-type X-ray device 12 for tires.

Various control programs, such as a tire wireless tag position inspecting program 34A, and various data 34B are stored in the auxiliary storage device 34. The auxiliary storage device 34 is structured by a hard disk. The CPU 22 carries out the processing of detecting the position of an RFID embedded in the tire T by reading-out the tire wireless tag position inspecting program 34A from the auxiliary storage device 34, expanding the program in the RAM 26, and executing processing.

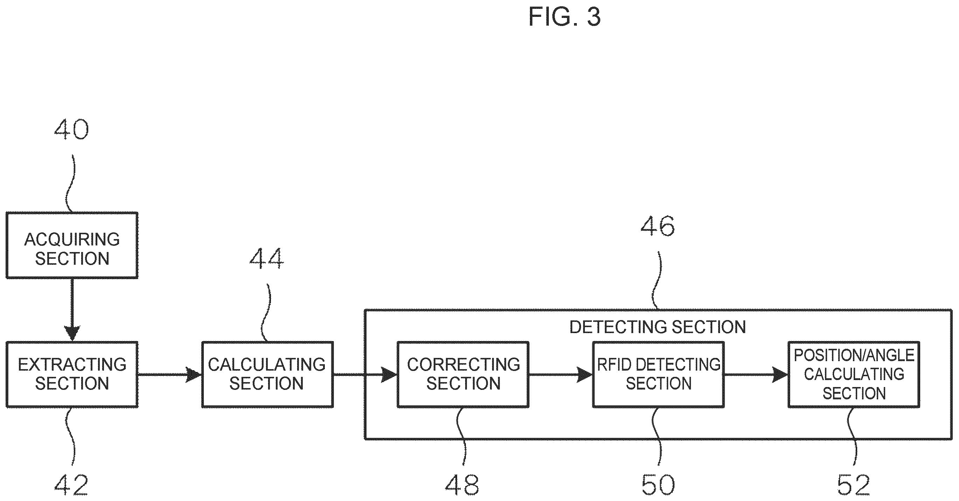

Functional structures of the processing device 20 of the tire wireless tag position inspecting device 10 relating to the present embodiment are described next. Fig. 3 is a functional block drawing illustrating functional structures of the processing device 20 of the tire wireless tag position inspecting device 10 relating to the present embodiment.

In the present embodiment, because imaging by X-rays is carried out from the side surface of the tire T while the tire T is being conveyed, the captured image of the tire T is elliptical, and the position of the RFID is distorted. Therefore, in order to detect the position and the angle of the RFID, the elliptical shape must be made into a shape that is close to the actual object. Although it is desired to capture an image of the tire T as a perfect circle, the captured image is distorted due to the frame rates of the imaging sections 16, the positional relationships of the imaging sections 16 and the tire T, and the conveying speed. In particular, the conveying speed contributes greatly. Although the image capturing speed is constant, if the conveying speed is fast, the captured image that is captured will be elliptical.

Thus, at the processing device 20, processing is carried out in which the bead in which the RFID is embedded is extracted from the captured image, an ellipse equation is calculated by carrying out ellipse fitting, the calculated ellipse is corrected into a perfect circle, and the position and angle of the RFID is detected from the captured image that has been corrected.

Specifically, as illustrated in Fig. 3, due to the CPU 22 executing the program stored in the ROM 24, the processing device 20 functions as an acquiring section 40, an extracting section 42, a calculating section 44 and a detecting section 46.

The acquiring section 40 acquires the X-ray captured image that is captured by the imaging sections 16 due to X-rays being irradiated from the X-ray tubes 14 onto the tire T, in which the RFID is embedded, while the tire is being conveyed.

The extracting section 42 extracts predetermined bead images from the captured image acquired by the acquiring section 40. In the present embodiment, at the time of conveying the tire, the tire is conveyed such that the serial number side thereof faces upward. Therefore, bead images at the serial number side are extracted such that it is it easy to read the RFID.

Because the RFID exists at the side surface of the tire T where the upper bead is located, this time, in guaranteeing the position and guaranteeing the angle, the upper bead is used as the reference, and the extracting section 42 extracts the upper bead from the captured image by extracting the bead at the inner side that is captured.

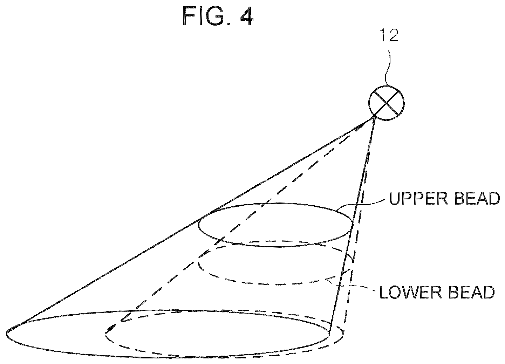

In the present embodiment, because the tires T that are different sizes are imaged after being rejected, the positional relationship between the upper bead and the lower bead illustrated in Fig. 4 as an example does not break down in a captured image. Namely, in the captured image, the upper bead (the solid line) is positioned at the inner side of the lower bead (the dashed line) at the right side in Fig. 4, and, at the left side of Fig. 4, the lower bead (the dashed line) is positioned at the inner side of the upper bead (the solid line).

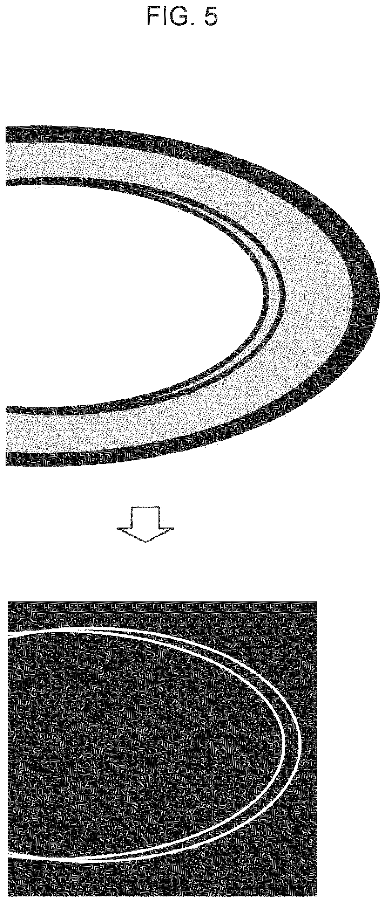

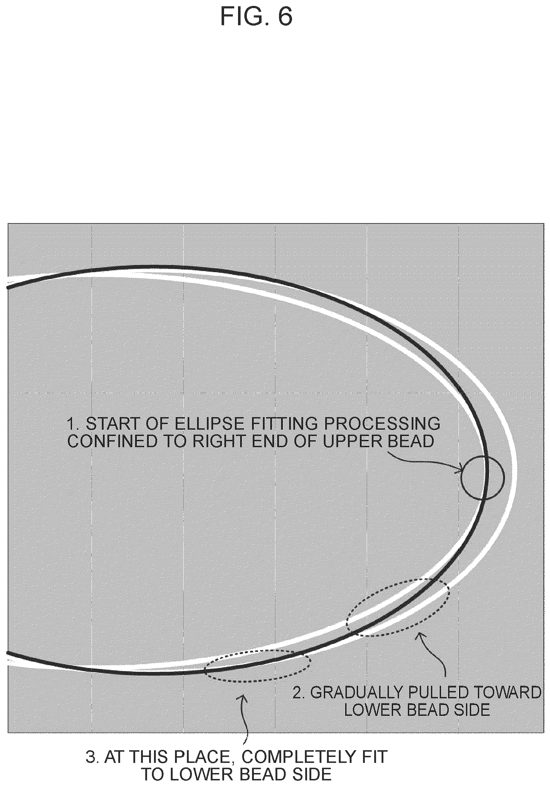

Here, when an image of the upper and lower beads is captured, as illustrated in Fig. 5, the upper and lower beads are reflected in the image, and when extracting the bead images, the upper and lower beads are extracted. Usually, it is not possible to discriminate which is the upper bead and which is the lower bead. Therefore, for example, as illustrated in Fig. 6, ellipse fitting processing is started while being confined to the right end of the upper bead, and when fitting to a predetermined reference ellipse is started, there are cases in which the upper bead is gradually pulled toward the lower bead, and the reference ellipse is fit to the lower bead at the upper side and the lower side in Fig. 5 of the captured image. Although it is desired to extract only the upper bead, processing is affected by the image of the lower bead. Because both the upper and lower beads exist, an accurate elliptical shape cannot be extracted, and an incorrect ellipse equation is calculated at the calculating section 44.

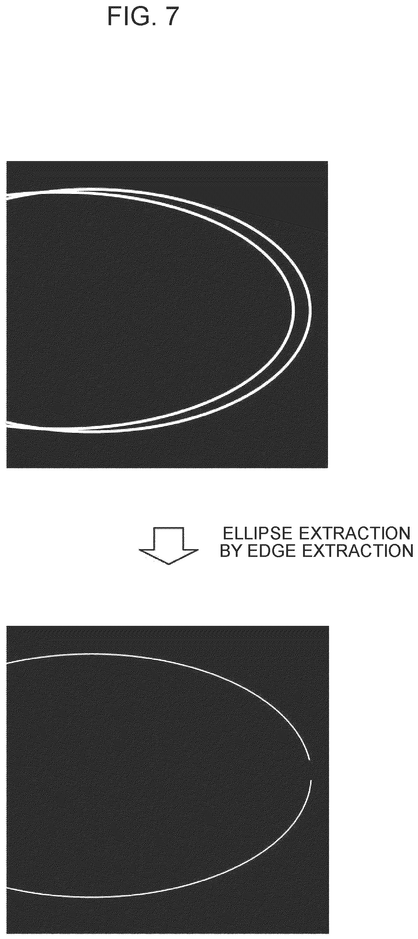

Thus, as illustrated in Fig. 7, the extracting section 42 extracts only the upper bead by extracting the ellipse by edge extraction. Note that, although the upper bead is extracted in the present embodiment, the position of the RFID being at the upper bead or at the lower bead is determined by the type and the size and the like of the tire, and there are cases in which the RFID is embedded in the lower bead. In this case, the lower bead may be extracted. Because the position of the upper bead and the position of the lower bead in the captured image are determined by the positions and sizes of the X-ray tubes 14 and the tire T, this example is one example.

The calculating section 44 calculates an ellipse equation in which the bead image extracted by the extracting section 42 and a predetermined reference image match one another. At the time of calculating the ellipse equation, the calculating section 44 greatly speeds up processing by parameter reduction and discretization by using the geometric properties of ellipses, by known techniques. The ellipse equation has six parameters that are the parameters of the ellipse equation that is a general equation ((x-p)²/a²)+(y-q)²)/b²) = r² ), and angle θ. However, these can be reduced to four parameters on the basis of the position of the tire T that is imaged. In the present embodiment, the ellipse is only distorted laterally or longitudinally due to the positional relationship between the imaging sections 16 and the tire T, and therefore, angle θ can be excluded. Further, the entire equation is divided by a, and the parameters a and b of the ellipse are made to be 1. Further, by discretization, p and q are known when the center of the ellipse is determined.

The calculating section 44 calculates the ellipse equation by reducing the number of parameters by using, as an example of a known technique, a technique such as that of the thesis (Michele Fornaciari; "Very Fast Ellipse Detection for Embedded Vision Applications", Publisher: IEEE, ISBN: 978-1-4503-1772-6).

The detecting section 46 detects the position and angle of the RFID by using the ellipse equation calculated by the calculating section. In detail, the detecting section 46 has a correcting section 48, an RFID detecting section 50, and a position/angle calculating section 52.

On the basis of the ellipse equation calculated by the calculating section 44, the correcting section 48 corrects the ellipse into a perfect circle. The ellipse is corrected into a perfect circle by the ratio of the long axis and the short axis of the ellipse.

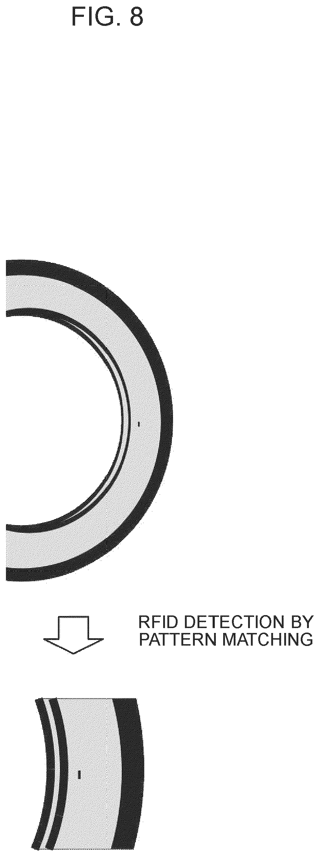

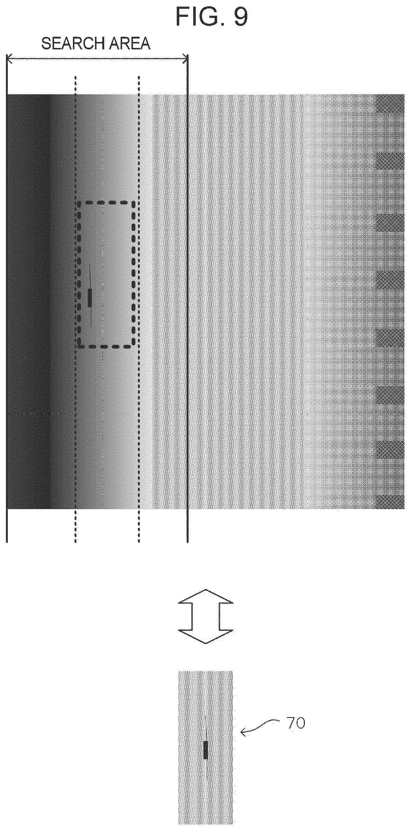

The RFID detecting section 50 detects a region including the RFID as illustrated in Fig. 8 from the captured image that was corrected into a perfect circle by the correcting section 48. Specifically, as illustrated in Fig. 9, a predetermined reference RFID image 70 is readied, and by carrying out pattern matching with the reference RFID image 70, a region where matching is high is searched for. In detail, the captured image, which has been corrected into a perfect circle by the correcting section 48, is, as illustrated in Fig. 9, transformed into a strip-shaped image by polar coordinate transformation, and an RFID is searched for by pattern matching with the reference RFID image 70. As illustrated in Fig. 9, in searching for an RFID, a predetermined search area is searched.

The position/angle calculating section 52 calculates the position and the angle of inclination of the RFID detected by the RFID detecting section 50. The position/angle calculating section 52 uses the center of the circle that the bead image makes as a reference, and calculates the circumferential direction position, and the inclination with respect to a line tangent to the reference circle, of the RFID that has been found. The radial direction position of the RFID can be estimated from the distance on the image, by dividing the value of the radius of the bead image in the image by the value of the radius of the tire bead member in the structural design of the tire.

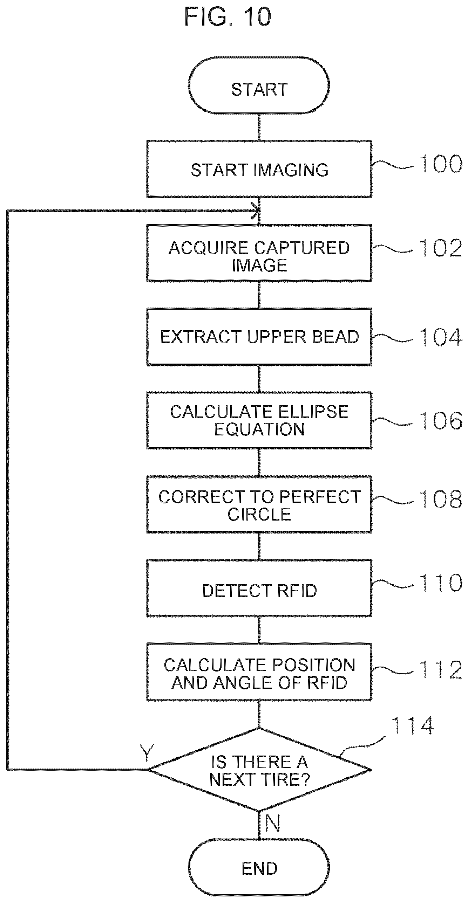

The specific processing carried out at the processing device 20 of the tire wireless tag position inspecting device 10 relating to the present embodiment is described next. Fig. 10 is a flowchart illustrating an example of the flow of processing carried out at the processing device 20 of the tire wireless tag position inspecting device 10 relating to the present embodiment. Note that the processing of Fig. 10 starts, for example, when the start of inspecting an RFID embedded in a tire is instructed.

In step 100, the CPU 22 irradiates X-rays from the X-ray tubes 14 onto the tire T, and starts imaging by the imaging sections 16, and moves on to step 102.

In step 102, the CPU 22 acquires captured images from the imaging sections 16, and moves on to step 104. Namely, the acquiring section 40 acquires X-ray captured images that were captured by the imaging sections 16 due to X-rays being irradiated from the X-ray tubes 14 onto the tire T in which an RFID is embedded, while the tire is being conveyed.

In step 104, the CPU 22 extracts the upper bead from the captured image, and moves on to step 106. Namely, the extracting section 42 extracts an upper bead image as a predetermined bead image from the captured images acquired by the acquiring section 40.

In step 106, the CPU 22 calculates the ellipse equation of the upper bead, and moves on to step 108. Namely, the calculating section 44 calculates an ellipse equation in which the bead image extracted by the extracting section 42 and a predetermined reference image match one another.

In step 108, the CPU 22 corrects the ellipse into a perfect circle and moves on to step 110. Namely, on the basis of the ellipse equation calculated by the calculating section 44, the correcting section 48 corrects the ellipse into a perfect circle by the ratio of the long axis and the short axis of the ellipse.

In step 110, the CPU 22 detects an RFID from the captured image that has been corrected into a perfect circle, and moves on to step 112. Namely, as illustrated in Fig. 8, the RFID detecting section 50 detects a region that includes the RFID from the captured image that was corrected into a perfect circle by the correcting section 48. Specifically, as illustrated in Fig. 9, the predetermined reference RFID image 70 is readied, and by carrying out pattern matching with the reference RFID image 70, a region where the matching is high is searched for.

In step 112, the CPU 22 calculates the position and the angle of the RFID and moves on to step 114. Namely, the position/angle calculating section 52 calculates the position and the angle of inclination of the RFID detected by the RFID detecting section 50. The position/angle calculating section 52 uses the center of the circle that the bead image makes as a reference, and calculates the circumferential direction position, and the inclination with respect to a tangent line of the reference circle, of the RFID that has been found. The radial direction position of the RFID can be estimated from the distance on the image, by dividing the value of the radius of the bead image in the image by the value of the radius of the tire bead member in the structural design of the tire.

In step 114, the CPU 22 judges whether or not there is a next tire T. In this judgement, it is judged whether or not a next tire T has been conveyed in. If this judgment is affirmative, the CPU 22 returns to step 102 and repeats the above-described processings. If this judgement is negative, the CPU 22 ends the series of processings.

Conventionally, a separate imaging device is needed when attempting to accurately image the tire T. For example, the beads are fixed, the full azimuth of the tire T is imaged by a camera, the distance between a bead and the RFID is measured, and each tire T that is being conveyed is picked up and rotated, and X-ray inspection is carried out. With such a method, a separate device is required, and therefore, costs increase, and the space for placement also increases. Moreover, time is required because the tire T is picked up and X-ray inspection is carried out.

In contrast, in the tire wireless tag position inspecting device 10 relating to the present embodiment, there is no need to incorporate a separate device in, and the tire T passing through the tire wireless tag position inspecting device 10 is imaged, and the position of the RFID can be detected merely by correcting the determined ellipse equation into a perfect circle. Accordingly, the cost of and time for detecting RFIDs can be reduced, and the processing capacity also is accelerated.

Further, inspecting of RFIDs can be implemented non-destructively by the tire wireless tag position inspecting device 10 relating to the present embodiment. By carrying out inspection during the idle time of the existing transmission-type X-ray device 12 for tires, RFID inspection is possible without lowering the processing capacity of an existing inspection line. Moreover, an inspecting function can be added without newly providing an additional conveyor line for inspection.

Note that, although the above embodiment describes an example using the transmission-type X-ray device 12 for tires that captures images by linear X-ray detectors, the imaging sections 16 are not limited to linear X-ray detectors. For example, the present disclosure may be applied to imaging using area-type X-ray detectors.

Further, the processing executed by the CPU reading-in software (a program) in the above-described embodiment may be executed by any of various types of processors other than a CPU. Examples of processors in this case include PLDs (Programmable Logic Devices) whose circuit structure can be changed after production such as FPGAs (Field-Programmable Gate Arrays), and dedicated electrical circuits that are processors having circuit structures that are designed for the sole purpose of executing specific processings such as ASICs (Application Specific Integrated Circuits). Further, the processing may be executed by one of these various types of processors, or may be executed by a combination of two or more of the same type or different types of processors (e.g., plural FPGAs, or a combination of a CPU and an FPGA). Further, the hardware structures of these various types of processors are, more specifically, electrical circuits that combine circuit elements such as semiconductor elements.

Further, in the above embodiment, the program may be stored in advance in the ROM. However, in a case in which the control section 70 has a storage, the program may be provided to the control section 70 in a form of being stored on a non-transitory storage medium such as a CD-ROM (Compact Disk Read Only Memory), a DVD-ROM (Digital Versatile Disk Read Only Memory), or a USB (Universal Serial Bus) memory, and installed in the storage. Further, the program may be in a form of being downloaded from an external device over a network.

The technical scope of the present disclosure is not limited to the scope of the above-described embodiment. Various changes and modifications can be added to the above-described embodiment within a scope that does not depart from the gist, and such forms to which changes or modifications have been added also are included in the technical scope of the present disclosure.

## Claims

1. A tire wireless tag position inspecting method in which a computer carries out processing of:
acquiring a captured image captured by X-rays being irradiated onto a tire, in which a wireless tag is embedded, while the tire is being conveyed;
extracting a predetermined bead image from the captured image;
calculating, from the extracted bead image, an ellipse equation that matches a predetermined reference image; and
detecting a position of the wireless tag by using the calculated ellipse equation.

2. The tire wireless tag position inspecting method of Claim 1, wherein the computer extracts a bead at a serial number side as the predetermined bead.

3. The tire wireless tag position inspecting method of Claim 1 or Claim 2, wherein, when calculating the ellipse equation, the computer carries out calculation while reducing a number of parameters of the ellipse equation.

4. The tire wireless tag position inspecting method of Claim 3, wherein, when calculating the ellipse equation, the computer calculates the ellipse equation by using four parameters of the ellipse equation.

5. The tire wireless tag position inspecting method of any one of Claims 1 through 4, wherein the computer corrects the ellipse equation into a perfect circle, and detects a position and an angle of the wireless tag from the corrected perfect circle.

6. A tire wireless tag position inspecting device comprising:
an acquiring section acquiring a captured image captured by X-rays being irradiated onto a tire, in which a wireless tag is embedded, while the tire is being conveyed;
an extracting section extracting a predetermined bead image from the captured image acquired by the acquiring section;
a calculating section calculating, from the bead image extracted by the extracting section, an ellipse equation that matches a predetermined reference image; and
a detecting section detecting a position of the wireless tag by using the ellipse equation calculated by the calculating section.

7. A tire wireless tag position inspecting program for causing a computer to execute processing of:
acquiring a captured image captured by X-rays being irradiated onto a tire, in which a wireless tag is embedded, while the tire is being conveyed;
extracting a predetermined bead image from the captured image;
calculating, from the extracted bead image, an ellipse equation that matches a predetermined reference image; and
detecting a position of the wireless tag by using the calculated ellipse equation.
